Europäisches Patentamt

European Patent Office

Office européen des brevets

(11) Numéro de publication: **0 379 750**
**A1**

## (12) DEMANDE DE BREVET EUROPEEN

(21) Numéro de dépôt: **89203223.6**

(51) Int. Cl.⁵: **H04B 7/005**

(22) Date de dépôt: **18.12.89**

Le titre de l'invention a été modifié (Directives relatives à l'examen pratiqué à l'OEB, A-III, 7.3)

(30) Priorité: **23.12.88 FR 8817111**

(43) Date de publication de la demande:
**01.08.90 Bulletin 90/31**

(84) Etats contractants désignés:
**DE FR GB IT SE**

(71) Demandeur: **TELECOMMUNICATIONS RADIOELECTRIQUES ET TELEPHONIQUES T.R.T.**
**88 rue Brillat Savarin**
**F-75640 Paris Cédex 13(FR)**

(72) Inventeur: **Pirolli, Claude Société Civile S.P.I.D.**
**209, rue de l'Université**
**F-75007 Paris(FR)**
Inventeur: **Alexis, Roger Société Civile S.P.I.D.**
**209, rue de l'Université**
**F-75007 Paris(FR)**
Inventeur: **Chelouche, Marc Société Civile S.P.I.D.**
**209, rue de l'Université**
**F-75007 Paris(FR)**

(74) Mandataire: **Chaffraix, Jean et al**
**Société Civile S.P.I.D. 209, rue de l'Université**
**F-75007 Paris(FR)**

(54) **Dispositif de transmission d'informations par voie hertzienne comportant des organes d'émission-réception.**

(57) Ce dispositif profite d'un gradient d'atténuation d'une zone (Z1) dans la bande de 50-60 GHz pour réguler le niveau de l'émission.

Application : transmission hertzienne à courte portée.

FIG. 2

EP 0 379 750 A1

# DISPOSITIF DE TRANSMISSION D'INFORMATIONS COMPORTANT DES ORGANES D'EMISSION-RECEPTION.

La présente invention concerne un dispositif de transmission d'informations comportant au moins un premier et un second organe d'émission-réception placés dans un milieu de propagation présentant une atténuation variable en fonction d'une fréquence utilisée pour la transmission, au moins un des organes comportant
- une partie émission pour émettre les informations utiles sur un signal porteur centré sur une fréquence porteuse établie à partir d'un oscillateur pilote comportant une commande de variation de fréquence,
au moins un des organes comportant :
- une partie réception pour recevoir les informations utiles transmises sur le signal porteur.

Le domaine d'application plus particulièrement visé dans le cadre de l'invention est la transmission par voie hertzienne ou par faisceaux hertziens.

Un tel dispositif est décrit dans l'article "Equipement Hertziens 23 GHz DTS 10-64 et FTD 23" de P.MARCHAND et E.FERNANDEZ paru dans la revue Commutation et Transmission, No.4 de 1986.

Bien que donnant entière satisfaction, ce dispositif décrit ne répond pas à des exigences de discrétion et de résistance au brouillage qu'imposent des applications tactiques. En d'autres termes, il faut que le faisceau hertzien atteigne l'organe d'émission-réception sur lequel il est dirigé en évitant une interception par un organe de réception non autorisé et en évitant qu'un organe d'émission brouille la transmission entre deux organes d'émission-réception faisant partie du dispositif.

Pour cela un tel dispositif est remarquable en ce que :
- au moins un des organes comporte un mesureur de niveau du signal porteur reçu pour agir sur la commande de variation de fréquence d'au moins un desdits oscillateurs pilote,
- et en ce que la variation de fréquence est choisie pour se situer dans une zone ou l'atténuation du milieu de propagation présente un fort gradient d'atténuation.

Une caractéristique importante de l'invention selon laquelle le milieu de propagation est l'atmosphère terrestre et selon laquelle ladite zone est située entre 50 GHz et 60 GHz environ, amène les avantages importants suivants :
- les antennes présentent de faibles dimensions et sont très directives, compatibles avec les exigences de discrétion,
- la bande de fréquence choisie apporte une large dynamique de niveau reçu qui correspond bien à la première mesure préconisée par l'invention.

Il est à noter qu'il est connu pour un dispositif radar d'utiliser cette bande de fréquences (voir à ce sujet le brevet américain 4 695 842). Dans ce brevet US, on n'est cependant pas confronté au problème de transmission imposé dans le cadre des faisceaux hertziens.

La description suivante, accompagnée des dessins ci-annexés, le tout donné à titre d'exemple non limitatif, fera bien comprendre comment l'invention peut être réalisée.

La figure 1 représente un dispositif conforme à l'invention.

La figure 2 montre la courbe d'atténuation de l'atmosphère terrestre en fonction de la fréquence.

La figure 3 montre en détail des éléments du dispositif représenté à la figure 1.

La figure 4 montre un circuit de multiplexage pour multiplexer les informations utiles et les informations de service.

La figure 5 montre un circuit de démultiplexage pour démultiplexer les informations utiles et les informations de service.

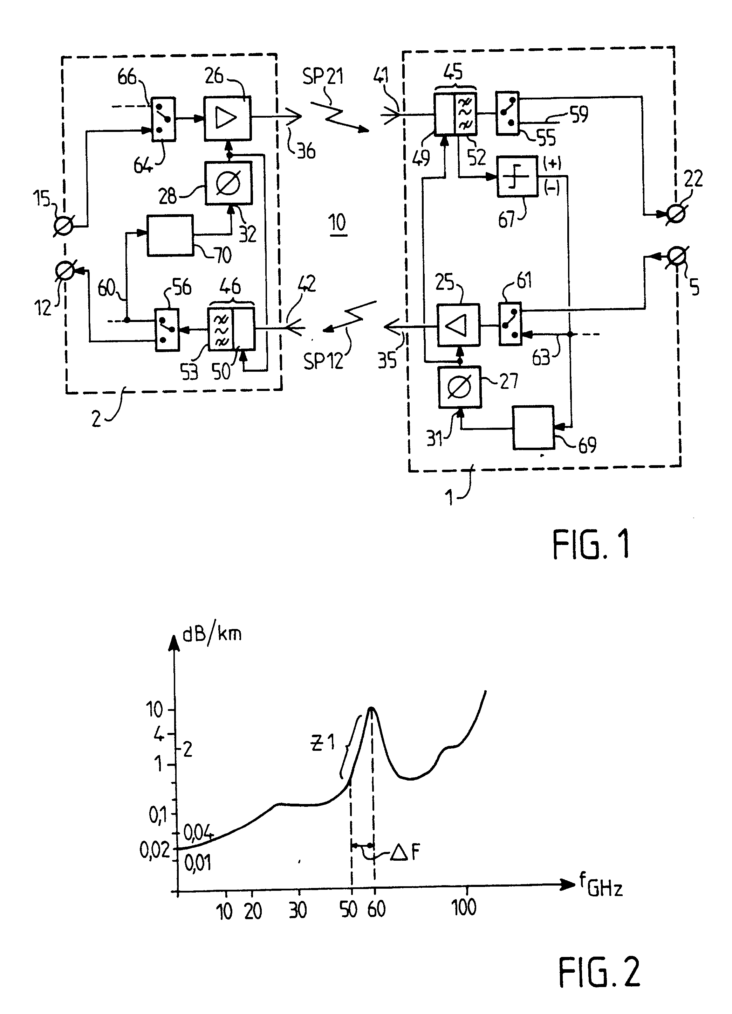

Sur la figure 1, les références 1 et 2 représentent des organes d'émission-réception faisant partie d'un dispositif de l'invention. Ces organes échangent de l'information selon le mode connu de "full-duplex". Ainsi, de l'information utile présente à une borne d'entrée 5 de l'organe 1 est transmise via le milieu de transmission 10 et se retrouve à une borne de sortie 12 de l'organe 2. Réciproquement, de l'information utile présente à une borne d'entrée 15 de l'organe 2 se trouve à la borne de sortie 22 de l'organe 1. Pour une transmission dans le milieu 10 de l'organe 1 vers l'organe 2, on utilise un signal porteur électromagnétique SP12 centré sur une fréquence porteuse FP12. De même, pour une transmission de l'organe 2 vers l'organe 1, un signal porteur SP21 centré sur une fréquence porteuse FP21 est utilisé. Pour engendrer les signaux électromagnétiques SP12 et SP21 les organes 1 et 2 comportent respectivement des circuits d'émission 25 et 26 qui sont pilotés par des oscillateurs 27 et 28 munis d'une commande de variation de fréquences 31 et 32 et qui comportent des sorties reliées aux embouchures d'antennes d'émission 35 et 36.

Afin de capter les signaux SP21 et SP12, les organes 1 et 2 comportent respectivement des antennes de réception 41 et 42 coopérant avec des circuits de réception 45 et 46. Ces circuits de réception 45 et 46 comportent selon les règles de l'art bien établies, un étage mélangeur 49 et 50 suivi d'un étage d'amplification à moyenne fréquence 52 et 53, la valeur de cette moyenne fréquence étant FI. L'étage mélangeur 49 et utilise les signaux de sortie des oscillateurs 27 et 28 comme cela est décrit dans l'article cité ci-dessus. Aux sorties des circuits de réception 45 et 46 il est prévu des démultiplexeurs à deux positions 55 et 56 qui fournissent, lorsqu'ils sont dans une première position l'information aux bornes 22 et 12, et dans une seconde position sur des lignes 59 et 60 des informations de service nécessaires à la coordination des liaisons entre les organes 1 et 2, comme cela est décrit dans l'article précité. De même on a disposé dans l'organe 1, à l'entrée du circuit d'émission 25 un multiplexeur 61 pour insérer dans le flot des informations utiles, les informations de service présentes sur une ligne 63 et un multiplexeur 64 pour faire la même opération de multiplexage d'informations utiles et d'informations de service sur une ligne 66.

A la figure 2, on a représenté la courbe d'atténuation en dB/km de l'atmosphère terrestre en fonction de la fréquence.

Conformément à l'invention on a choisi une zone Z1 présentant un écart de fréquence ΔF entre 50 GHz et 60 GHz pour lequel l'atténuation passe de, approximativement, 0,3 dB/km à 14-16 dB/km. On a ainsi un fort gradient d'atténuation. Un mesureur de niveau de signal porteur reçu est constitué par un circuit à seuil 67 (voir figure 1) qui compare le signal de commande automatique de gain dérivé du circuit de réception 45 avec une valeur de référence. Le signal de sortie est dirigé d'une part vers l'oscillateur local 27 et d'autre part vers l'oscillateur pilote 28 en empruntant la voie des informations de service. Le circuit à seuil fournit trois indications : la première lorsque le niveau reçu est convenable et que, de ce fait, aucune mesure n'est à entreprendre, la seconde lorsque le niveau est trop fort et la troisième lorsque le niveau est trop faible. Des circuits de mise en forme 69 et 70 traitent les informations de niveau reçu pour déterminer la fréquence des oscillateurs pilotes 27 et 28 respectivement.

On décrit maintenant plus en détail des éléments du dispositif de l'invention.

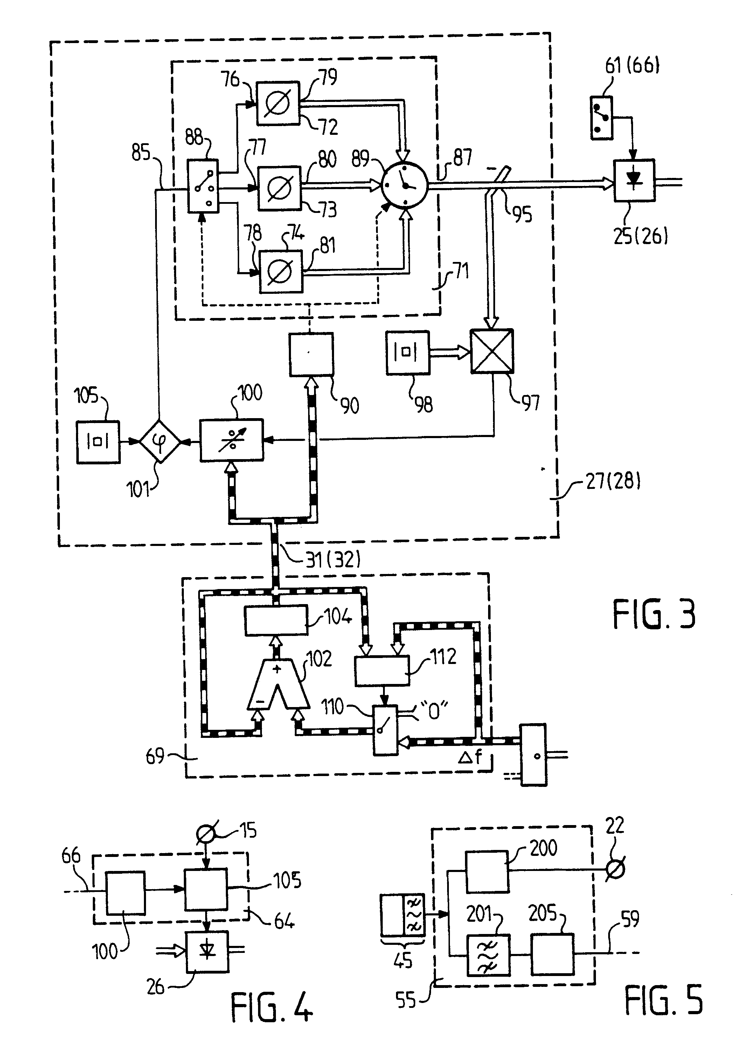

On se reporte à la figure 3. Suite à la difficulté d'élaborer des oscillateurs à commande de fréquence variant de 50 à 60 GHz, l'oscillateur pilote 27 (ou 28) est formé à partir d'un ensemble 71 comportant trois oscillateurs élémentaires 72, 73 et 74 munis chacun d'une commande de fréquence par tension 76, 77 et 78 et d'une sortie 79, 80 et 81. Ces oscillateurs peuvent, par exemple, osciller :
entre 50 et 54 GHz pour l'oscillateur 72,
entre 53 et 57 GHz pour l'oscillateur 73,
et entre 56 et 60 GHz pour l'oscillateur 74.
L'ensemble 71 présente une entrée 85 pour recevoir une tension de commande de fréquence et une sortie 87 pour fournir le signal à la fréquence porteuse. Un commutateur 88 relie l'entrée 85 à l'une des entrées de commande 76, 77 et 78 des oscillateurs 72, 73 et 74. Un commutateur de type hyperfréquence 89 relie la sortie 87 à l'une des sorties 79, 80 et 81. Les positions de commutation des commutateurs 88 et 89 sont déterminées par un circuit de commande de commutation 90 qui détermine la mise en fonctionnement de l'un desdits oscillateurs 72, 73 et 74 en fonction de la fréquence se présentant sous forme numérique à l'entrée de commande par tension 31 (32) de l'oscillateur 27 (28). Bien que cela ne soit pas représenté, il va de soi que les oscillateurs non utilisés ne sont pas alimentés. A cet ensemble 71 est associée une boucle d'asservissement en phase comportant :
- un coupleur directif 95 prélevant une partie de l'onde à la sortie 87,
- un mélangeur 97 opérant avec les harmoniques provenant d'un oscillateur à résonateur diélectrique 98 dont la fréquence nominale est de l'ordre de quelques Gigahertz, et qui est de préférence thermostaté,
- un diviseur numérique programmable 100 pour diviser la fréquence du signal de sortie du mélangeur par un nombre qui est celui appliqué à l'entrée 31,
- un comparateur de phase 101 qui compare la phase du signal à la sortie du diviseur 100,
- et un signal de référence issu d'un oscillateur à quartz 105 dont la fréquence nominale est de l'ordre de quelques Mégahertz.

Le circuit d'émission 25 (26) est simplement constitué par un modulateur d'amplitude à diode PIN recevant directement les signaux de modulation représentant les informations à transmettre.

Le circuit de mise en forme 69 est constitué d'un additionneur 102 coopérant avec un registre accumulateur 104 dont la sortie est reliée à l'entrée 31. L'information indiquant que le niveau est trop fort doit provoquer un accroissement Δf qui s'ajoute au contenu de l'accumulateur 104 et l'information indiquant que le niveau est trop faible doit provoquer un abaissement Δf qui se soustrait donc du contenu de l'accumulateur 104. Pour maintenir les écarts de fréquence dans la zone souhaitée, on a prévu des circuits de butée comportant un multiplexeur 110 qui substitue à Δf la valeur "O" lorsque, d'une part, la valeur Δf indique qu'il faut augmenter la fréquence alors que cette fréquence est à sa valeur maximale et que, d'autre part, la valeur Δf indique qu'il faut diminuer la fréquence alors que cette fréquence est à sa valeur minimale. La commande de position de ce multiplexeur 110 est élaborée par un circuit de décodage 112 qui détecte donc les conditions énoncées ci-dessus.

Le circuit de commande de commutation 90 analyse les deux éléments binaires de poids fort à l'entrée 31 pour déterminer l'oscillateur 72, 73 ou 74 à mettre en oeuvre, tandis que les éléments binaires, restants, de plus faible poids déterminent le nombre par lequel le diviseur 100 divise la fréquence du signal à son entrée.

Le circuit de mise en forme 70 est constitué de la même manière mais tient compte du décodage de fréquence qui existe entre les fréquences FP12 et FP21 (par exemple on a |F12-F21| = 2FI) pour assurer la liaison "full-duplex". Il est a noter que le mélangeur (49 ou 50) d'un des organes 1 ou 2 fonctionnera en supradyne tandis que le mélangeur de l'autre organe fonctionnera en infradyne. La valeur FI aura une valeur suffisamment faible pour que la différence d'atténuation des signaux SP12 et SP21 soit négligeable.

Une variante de l'invention consiste à utiliser trois oscillateurs possédant une plage d'accord de fréquence réduite destinée uniquement à compenser leur dérive thermique naturelle.

Les organes distants utilisent le même ensemble 71 mais avec des fréquences fixes préétablies. Par exemple :
- Pour l'organe 1 les oscillateurs 72, 73 et 74 auront pour valeurs fixes :
52,25 GHz
56,00 GHz
59,75 GHz
- Tandis que pour l'organe 2 les fréquences seront :
52,00 GHz
55,75 GHz
59,59 GHz.

Une autre variante possible consiste, pour réaliser le multiplexage des informations utiles et des informations de service opéré par les multiplexeurs 61 et 66, à moduler en amplitude (profondeur de modulation de l'ordre de 2 dB) les impulsions représentant les informations utiles par une sous-porteuse à 30 kHz modulée en fréquence par les informations de service. A la figure 4 qui représente le multiplexeur 64 le modulateur de fréquence est référencé par 100 et le modulateur d'amplitude par 105. Au niveau du récepteur le démultiplexeur sera muni d'un organe récepteur 200 pour rétablir les informations utiles, un circuit passe-bande 201 centré sur la fréquence de sous-porteuse fournira les informations à un organe réception 205 qui, lui, rétablira les informations de service. L'avantage ainsi obtenu est que les informations de service sont à faible débit et donc à faible taux d'erreur, ce qui permet de gérer la liaison, bien que la transmission des informations utiles puisse être fortement dégradée.

## Revendications

1. Dispositif de transmission d'informations comportant au moins un premier et un second organe d'émission-réception placés dans un milieu de propagation présentant une atténuation variable en fonction d'une fréquence utilisée pour la transmission, au moins un des organes comportant :
- une partie émission pour émettre les informations utiles sur un signal porteur centré sur une fréquence porteuse établie à partir d'un oscillateur pilote comportant une commande de variation de fréquence,
au moins un des organes comportant :
- une partie réception pour recevoir les informations utiles transmises sur le signal porteur,
caractérisé en ce que :
- au moins un des organes comporte un mesureur de niveau du signal porteur reçu pour agir sur la commande de variation de fréquence d'au moins un desdits oscillateurs pilote,
- et en ce que la variation de fréquence est choisie pour se situer dans une zone ou l'atténuation du milieu de propagation présente un fort gradient d'aténuation.

2. Dispositif de transmission selon la revendication 1, caractérisé en ce que le milieu de propagation est l'atmosphère terrestre et en ce que ladite zone est située entre 50 GHz et 60 GHz environ.

3. Dispositif de transmission selon la revendication 2, caractérisé en ce qu'au moins un des oscillateurs pilotes est formé d'une pluralité d'oscillateurs élémentaires comportant chacun une commande de variation de fréquence et des circuits de commande pour commuter, en fonction de la fréquence, d'une part la commande fréquence de l'oscillateur pilote à l'une des commandes d'un oscillateur élémentaire et d'autre part la sortie de l'oscillateur pilote sur l'une des sorties des oscillateurs élémentaires.

4. Dispositif selon l'une des revendications 1 à 3 comportant un premier organe d'émission-réception dit organe maître et un second organe d'émission-réception dit organe esclave, caractérisé en ce que les moyens de mesure de niveau sont situés dans l'organe maître et que la valeur de mesure est transmise vers l'organe esclave pour agir sur la commande de fréquence de son oscillateur pilote.

5. Dispositif selon la revendication 4, caractérisé en ce que la valeur de mesure agit sur la commande de fréquence de l'oscillateur pilote de l'organe maître.

6. Dispositif selon l'une des revendications 1 à 5 dans lequel il est prévu des circuits de multiplexage pour transmettre avec le même signal porteur des informations utiles à débit rapide et des informations de service à débit lent, caractérisé en ce que les valeurs de mesure sont transmises en tant qu'informations de service.

FIG. 1

FIG. 2

FIG. 3

FIG. 4

FIG. 5

<table>
<tr><td rowspan="2">Office européen<br>des brevets</td><td rowspan="2"><strong>RAPPORT DE RECHERCHE EUROPEENNE</strong></td><td>Numero de la demande</td></tr>
<tr><td>EP 89 20 3223</td></tr>
</table>

## DOCUMENTS CONSIDERES COMME PERTINENTS

| Catégorie | Citation du document avec indication, en cas de besoin, des parties pertinentes | Revendication concernée |
|---|---|---|
| X | DE-C- 877 325 (TELEFUNKEN)<br>* Page 1, ligne 25 - page 2, ligne 4 * | 1 |
| A | | 4 |
| | --- | |
| X | US-A-2 125 977 (ZWORYKIN)<br>* Page 1, colonne de droite, ligne 16 - page 2, colonne de gauche, ligne 5 * | 1 |
| A | | 4 |
| | --- | |
| A | FR-A-2 148 920 (THOMSON-CSF)<br>* Page 2, lignes 1-25 * | 3 |
| | ----- | |

**CLASSEMENT DE LA DEMANDE (Int. Cl.5)**

H 04 B 7/005

**DOMAINES TECHNIQUES RECHERCHES (Int. Cl.5)**

H 04 B
H 03 L

Le présent rapport a été établi pour toutes les revendications

| Lieu de la recherche | Date d'achèvement de la recherche | Examinateur |
|---|---|---|
| LA HAYE | 28-03-1990 | HOLPER G.E.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................
& : membre de la même famille, document correspondant

EPO FORM 1503 03.82 (P0402)